# EUROPÄISCHE PATENTSCHRIFT

(11) **EP 1 051 904 B1**
(45) Veröffentlichungstag und Bekanntmachung des Hinweises auf die Patenterteilung: **16.03.2005**
(21) Anmeldenummer: 00108045.6
(22) Anmeldetag: 20.04.2000
(51) Int. Cl.: A01K 63/04, G05D 11/03

(54) **Verfahren zur kontinuierlichen Langzeitdosierung von Kohlendioxid in biologisch genutzten Medien, und ein Set sowie ein Nachrüstset zur Durchführung dieses Verfahrens**
Process for metering continuously carbon dioxyde in biologically utilized media, a set and a retofit set to perform this process
Procédé de dosage de dioxyde de carbone dans des milieus utilisés biologiquement, ensemble et ensemble de maintenance pour réaliser ce procédé

(30) Priorität: 30.04.1999 DE 19919798
(43) Veröffentlichungstag der Anmeldung: 15.11.2000
(73) Patentinhaber: Söchting, Klaus, Dr., 82544 Attenham (DE)
(72) Erfinder: Söchting, Klaus, Dr., 82544 Attenham (DE)
(74) Vertreter: HOFFMANN - EITLE

(56) Entgegenhaltungen:
- WO-A-90/11248
- DE-A- 2 554 957
- DE-A- 4 414 796
- DE-U- 8 125 288
- US-A- 4 620 970
- PATENT ABSTRACTS OF JAPAN vol. 003, no. 116 (M-074), 27. September 1979 (1979-09-27) & JP 54 093215 A (TOPPAN PRINTING CO LTD), 24. Juli 1979 (1979-07-24)

## Beschreibung

Die vorliegende Erfindung betrifft ein Dosierverfahren zur steuerbaren und kontinuierlichen Erzeugung von Kohlendioxid (CO₂) und dessen Abgabe in biologisch genutzte Systeme sowie ein Set und ein Nachrüstset, die die Durchführung dieses Verfahrens ermöglichen.

Auf verschiedenen Gebieten der Wartung biologischer Systeme besteht ein Bedarf nach einer gleichmäßigen und gezielten Zuführung von Kohlendioxid über einen längeren Zeitraum. Dies ist z.B. der Fall bei der Aufzucht oder Haltung von Pflanzen in geschlossenen Räumen wie beispielsweise in Gewächshäusern, und insbesondere in wässrigen Systemen, beispielsweise in Teichen oder Aquarien.

Zur Versorgung von Teichen oder Aquarien mit Kohlendioxid sind im Stand der Technik verschiedene Verfahren bekannt.

Beispielsweise kann die Versorgung über Gasdosiersysteme aus mit Kohlendioxid druckbeaufschlagten Gaskartuschen erfolgen. Dieses Verfahren besitzt jedoch den Nachteil, daß mit abnehmenden Gasdruck in der Kartusche die zugeführte CO₂-Menge pro Zeiteinheit ohne Nachregulierung des Dosiersystems kontinuierlich abnimmt. Darüber hinaus erfordert ein CO₂-Dosiersystem unter Verwendung von Gaskartuschen einen großen Raumaufwand und ist ästhetisch unbefriedigend. Dies ist insbesondere bei Zierteichen und Aquarien nachteilhaft.

Ein weiteres bekanntes Verfahren ist die In-Situ-Erzeugung von CO₂ aus einem Carbonat durch Einwirkung einer Mineralsäure, üblicherweise Salzsäure, in einem Kipp'schen Apparat. Eine solche Vorrichtung kann jedoch nur außerhalb des zu versorgenden Gewässers in geeigneter Weise betrieben werden, und ist daher mit ähnlichen räumlichen und ästhetischen Unzulänglichkeiten verknüpft wie das oben beschriebene Verfahren. Darüber hinaus ist die Handhabung von Mineralsäuren wie Salzsäure durch ungeübte Anwender nicht unbedenklich.

Des weiteren wurde ein Verfahren vorgeschlagen, in dem aus einer Brausetablette aus Natriumhydrogencarbonat und Zitronensäure durch langsame Zugabe von Wasser CO₂ dosiert freigesetzt wird. Nachteilig an diesem Verfahren ist, daß bei langsamer Zugabe von Wasser in kurzer Zeit eine undurchlässige Citratschicht auf der Brausetablette gebildet wird, die eine weitere Reaktion verhindert. Dadurch kann eine kontinuierliche Erzeugung von CO₂ nur über einen kurzen Zeitraum von wenigen Tagen gewährleistet werden.

Zur Überwindung der obengenannten Probleme wird ein Verfahren bereitgestellt, das die gesteuerte und über einen langen Zeitraum konstante Erzeugung von CO₂ ermöglicht, wie es in Anspruch 1 definiert ist. Bevorzugte Ausführungsformen ergeben sich aus den Ansprüchen 2-10.

Darüber hinaus wird die obige Aufgabe gelöst durch das erfindungsgemäß bereitgestellte Set zur Durchführung des Verfahrens, das eine geeignete Vorrichtung und die erforderlichen Ausgangssubstanzen enthält, wie es in Anspruch 11 definiert ist. Bevorzugte Ausführungsformen ergeben sich aus den Ansprüchen 12-15.

Weiterhin dient zur Lösung der obigen Aufgabe ein Nachrüstset, das die erforderlichen Ausgangssubstanzen zur Durchführung des Verfahrens sowie auszutauschende Teile der verwendeten Vorrichtung umfaßt, wie in Anspruch 16 definiert.

Bevorzugte Ausführungsformen ergeben sich aus den Ansprüchen 17 und 18.

Das erfindungsgemäße Verfahren zur kontinuierlichen Dosierung von CO₂ umfaßt die folgenden Schritte:
i) Austreiben einer wäßrigen Säurelösung aus einem Vorratsbehälter mittels einer gasdruckerzeugenden chemischen Reaktion,
ii) Eintropfen der Säurelösung in eine feste und/oder flüssige Carbonat- oder Hydrogencarbonatzusammensetzung, und
iii) Zuführung des entstehenden CO₂ in das biologisch genutzte Medium.

Durch dieses Verfahren und die zu dessen Durchführung verwendeten Sets und Nachrüstsets werden folgende vorteilhafte Effekte erzielt:
- Die Freisetzung von CO₂ erfolgt preisgünstig und auf kleinstem Raum.
- Es kann eine große Menge CO₂ in den Ausgangssubstanzen gespeichert und über eine lange Zeit abgegeben werden.
- Die Erzeugung von CO₂ ist nach Bedarf des Anwenders justierbar und über einen langen Zeitraum konstant.
- In Aquarien kann das CO₂ ohne Schlauchverbindungen an das Wasser abgegeben werden, ohne daß es zur Verunreinigung mit anderen Substanzen kommt.

Im Folgenden schließt die Bezugnahme auf "Carbonat" oder "Carbonatlösung" und im folgenden auch Hydrogencarbonate bzw. deren Lösungen ein, sofern nichts anderes angegeben ist.

Die obengenannte wäßrige Lösung einer Säure kann eine Lösung einer beliebigen Säure sein, die zur Ausbildung einer hinreichend stabilen wäßrigen Lösung in der Lage ist, und die geeignet ist, durch Reaktion mit einem Carbonat oder seiner wäßrigen Lösung CO₂ freizusetzen. Vorzugsweise ist die verwendete Säure eine in reiner Form feste Verbindung, aus der die wäßrige Lösung erst direkt vor der Anwendung hergestellt wird.

Ebenso ist es bevorzugt, daß durch die Reaktion der Säure mit dem Carbonat ein Salz gebildet wird, dessen Löslichkeit so hoch ist, daß es aus der wäßrigen Mischung, die durch das Eintropfen der Säurelösung in das Carbonat oder deren Lösung gebildet wird, nicht ausfällt. Es können auch Mischungen aus zwei oder mehr Säuren verwendet werden.

Das Carbonat, in das oder in dessen Lösung die wäßrige Säurelösung eingetropft wird, ist eine beliebige Carbonat- oder Hydrogencarbonatverbindung. Wie oben gesagt ist bevorzugt, daß das durch Reaktion mit der eingetropften Säure entstehende Salz gelöst bleibt. Es können auch Mischungen aus zwei oder mehr Carbonatverbindungen verwendet werden.

Weiterhin sollten vorzugsweise sowohl die Ausgangsverbindungen als auch das entstehende Salz gesundheitlich und ökologisch unbedenklich sein, und die daraus freisetzbare Menge CO₂, bezogen auf das Gewicht der Ausgangsstoffe, möglichst hoch sein.

Bevorzugt zu verwendende Carbonatverbindungen sind die Carbonate und Hydrogencarbonate der Alkalimetalle, und besonders bevorzugt ist Natriumhydrogencarbonat.

Eine besonders bevorzugt zu verwendende Säure ist Zitronensäure.

Diese genannten Komponenten besitzen ferner die Vorteile, daß sie preisgünstig erhältlich und leicht zu lagern und zu transportieren sind.

Die zum Austreiben der Säurelösung aus dem Vorratsbehälter ausgenutzte gasdruckerzeugende Reaktion ist die Umsetzung einer in der wäßrigen Säurelösung gelösten oder suspendierten Verbindung unter Freisetzung eines gasförmigen Reaktionsprodukts. Vorzugsweise handelt es sich hierbei um die Zersetzung einer metastabilen Verbindung, beispielsweise einer Persauerstoffverbindung, wie Wasserstoffperoxid oder Derivate davon. Es können auch Mischungen aus zwei oder mehr miteinander verträglichen Verbindungen verwendet werden.

Die Zersetzung kann durch einen geeigneten Katalysator katalysiert werden. Durch geeignete Dosierung des Katalysators kann die Menge des erzeugten Gasvolumens pro Zeiteinheit und somit die Austriebsgeschwindigkeit der Säurelösung innerhalb eines weiten Bereiches exakt eingestellt werden. Dabei ist zu Berücksichtigen, daß die Temperatur des umgebenden Systems die Reaktionsgeschwindigkeit der katalysierten Reaktion beeinflußt, daher sind in wärmeren Umgebungen wie beispielsweise tropischen Aquarien geringere Katalysatormengen zur Erzielung gleicher Gasmengen pro Zeiteinheit erforderlich als in kälteren Medien.

Es ist ferner auch möglich, den Katalysator ganz oder teilweise direkt vor der Anwendung in den Säurebehälter einzuführen. Dadurch kann die Austriebsgeschwindigkeit der Säurelösung, und damit die Menge des pro Zeiteinheit erzeugten CO₂, durch den Anwender individuell eingestellt werden.

Als Katalysatoren sind beliebige im Stand der Technik als Zersetzungskatalysatoren bekannte Verbindungen geeignet, die die katalytische Zersetzung der obengenannten Verbindungen unter Erzeugung gasförmiger Produkte bewirken. Bei Verwendung von H₂O₂ oder Peroxidverbindungen ist MnO₂ oder Platin ein bevorzugtes Katalysatormaterial, besonders bevorzugt keramisch gebundenes MnO₂. Es können auch Mischungen aus zwei oder mehr miteinander verträglichen Katalysatoren verwendet werden.

Vorzugsweise ist die Zusammensetzung der Komponenten im Vorratsbehälter zu Beginn des erfindungsgemäßen Verfahrens so eingestellt, daß das durch die Gasdruck erzeugende Reaktion entstehende Gasvolumen zum Austreiben der gesamten wäßrigen Säurelösung aus dem Vorratsbehälter ausreicht. Gleichzeitig sollte die Menge der zu gasförmigen Produkten zu zersetzenden Komponente so bemessen sein, daß die gesamte Säurelösung mit nahezu konstanter Austriebsgeschwindigkeit aus dem Vorratsbehälter abgegeben wird. Die hierzu erforderlichen bzw. geeigneten Mengen können in Abhängigkeit von der konkreten Ausgestaltung des verwendeten Systems variieren. Als geeignet haben sich jedoch Mischungsverhältnisse von 0,01 bis 0,03 Mol der zu zersetzenden Verbindung auf 1 Mol auszutreibender Säure herausgestellt.

Das durch das Eintropfen der Säurelösung in das Carbonat oder dessen Lösung entstehende gasförmige CO₂ wird über geeignete Gaszuleitungsvorrichtungen dem biologisch genutzten Medium zugeführt. Im Falle wäßriger biologischer Medien wie beispielsweise Teiche oder Aquarien kann das CO₂ vorzugsweise über eine Taucherglocke mit der Wasseroberfläche in Kontakt gebracht und über diese im Wasser diffusiv gelöst werden. Als Wasseroberfläche ist hierin sowohl die Oberfläche des zu versorgenden Gewässers zu verstehen, als auch eine innerhalb des Gewässers unter der Taucherglocke erzeugte künstliche Wasseroberfläche, die mit dem Gasvolumen einer zur Durchführung des erfindungsgemäßen Verfahrens geeigneten Vorrichtung in Kontakt steht.

Eine solche Vorrichtung ist beispielhaft in einer bevorzugten Ausführungsform für den Einsatz in einem Teich oder Aquarium in Figur 1 schematisch dargestellt.

Sie umfaßt einen Vorratsbehälter (1) für das Carbonat und/oder dessen Lösung, einen darin anzubringenden Vorratsbehälter (2) für die wäßrige Säurelösung.

Soweit erforderlich weist die Vorrichtung darüber hinaus ein Gaszuführsystem auf, über das das entstehende CO₂ in das zu versorgende biologische Medium eingeführt wird. Dies ist insbesondere bei wäßrigen biologischen Medien wie Teichen oder Aquarien der Fall. In einer bevorzugten Ausführungsform ist die Dosiervorrichtung mit einer Taucherglocke versehen, die es ermöglicht, die Vorrichtung unter Wasser einzusetzen und das CO₂ unter der Taucherglocke mit einer künstlich geschaffenen Wasseroberfläche zu kontaktieren. Eine solche bevorzugte Vorrichtung ist schematisch in Figur 1 gezeigt (Taucherglocke (3)).

Ferner ist für den Einsatz im Wasser ggf. eine Einrichtung vorhanden, die dafür sorgt, daß die Vorrichtung im Betrieb unter der Wasseroberfläche bleibt und nicht aufschwimmt

In einer Ausführungsform kann (4) ein zusätzliches Gewicht sein, das so dimensioniert ist, daß die Vorrichtung im Betrieb ein größeres Gewicht besitzt als die von ihr verdrängte Flüssigkeitsmenge.

Alternativ dazu kennzeichnet (4) einen oder mehrere Saugnäpfe, mit denen die Vorrichtung am Boden des Teichs oder des Aquariums angehaftet werden kann. In diesem Fall kann auf eine Beschwerung durch Gewichte verzichtet werden.

Das erfindungsgemäße Set zur Durchführung des Verfahrens zur kontinuierlichen Langzeitdosierung von CO₂ in biologisch genutzten Medien umfaßt eine geeignete Dosiervorrichtung, eine darauf abgestimmte Menge einer Carbonatverbindung und eine in dem Vorratsbehälter befindliche, in geeigneter Weise abgestimmte Mischung einer Säure, eine unter Erzeugung gasförmiger Produkte zu zersetzende Verbindung und gegebenenfalls den dafür erforderlichen Katalysator.

Vorzugsweise liegen in dem erfindungsgemäßen Set alle chemischen Komponenten in fester Form vor, da das Set einfacher herzustellen und zu handhaben ist, als wenn es flüssige Komponenten enthält. Darüber hinaus ist die Stabilität chemischer Verbindungen der hier vorliegenden Art in fester Form gegenüber ihren wäßrigen Lösungen verbessert. Daher ist es bevorzugt, die einzusetzenden Lösungen erst direkt vor der Anwendung herzustellen. Dadurch wird sichergestellt, daß das Set auch nach längerer Lagerung einwandfrei funktioniert und CO₂ in der gewünschten Menge pro Zeiteinheit liefert.

Der Vorratsbehälter für die Säurelösung ist so konstruiert, daß er an einer Stelle, die sich im Gebrauch unterhalb des Flüssigkeitsspiegels der wäßrigen Säurelösung befindet, eine Auslaßöffnung aufweist. Diese Auslaßöffnung ist so dimensioniert, daß die Säurelösung nicht durch die Austrittsöffnung abfließt. Andererseits muß die Öffnung so groß sein, daß ein Tröpfchenaustritt aufgrund des durch den Zersetzungsprozeß aufgebauten Druck möglich ist. Vorzugsweise ist die Austrittsöffnung von kreisförmigem oder annähernd kreisförmigem Querschnitt mit einem Durchmesser von 1-7 mm. Weiter bevorzugt befindet sich die Austrittsöffnung an der im Gebrauch des Vorratsbehälters tiefsten Stelle, wodurch die eingesetzte Säurelösung vollständig zur Erzeugung von CO₂ ausgenutzt werden kann, und kein Rest in dem Vorratsbehälter verbleibt.

Das erfindungsgemäße Nachrüstset zur Durchführung des erfindungsgemäßen Verfahrens umfaßt a) eine für die jeweilige Verwendungseinheit angepaßte Menge eines Carbonats in geeigneter Verpackung und b) einen Vorratsbehälter (2), der mit einer Zusammensetzung beschickt ist, umfassend (i) eine feste wasserlösliche Säure, (ii) eine vorzugsweise feste Verbindung, die katalytisch unter Gasentwicklung zersetzt werden kann, und (iii) einen Katalysator.

In einer bevorzugten Ausführungsform ist der mit der Reaktionsmischung für den Vorratsbehälter (2) beschickte Vorratsbehälter (2) ein einstückiger, fest verschlossener Hohlkörper, dessen einzige Öffnung die Austrittsöffnung für die Säurelösung ist. Während der Lagerung und des Transports bis direkt zum Zeitpunkt der Anwendung ist diese Austrittsöffnung vorzugsweise fest verschlossen, beispielsweise mit einem Klebestreifen, einer Abreißfolie oder ähnlichem.

Die Dimensionierung des erfindungsgemäßen Sets sowie des erfindungsgemäßen Nachrüstsets kann in Abhängigkeit von der angestrebten Verwendung innerhalb eines weiten Bereichs variieren. Die Dimensionierung richtet sich nach dem mit CO₂ zu versorgenden Luft- bzw. Wasservolumen, der gewünschten aufrechtzuerhaltenden CO₂-Konzentration innerhalb dieses Volumens, und dem Zeitraum, für den eine kontinuierliche Versorgung ohne Unterbrechung gewährleistet werden soll.

Zur Anwendung wird die Säuremischung im Behälter durch Wasserzugabe über die Austrittsöffnung in der vorgegebenen Menge Wasser aufgelöst. In den Reaktionsraum unterhalb des Vorratsbehälters (2) wird eine geeignete Menge Carbonat eingeführt, vorzugsweise in Tablettenform. Dies ist vorzugsweise eine für die vollständige Nutzung der Säure gerade ausreichende Menge. Dabei kann es je nach der verwendeten Chemikalien und der eingesetzten Wassermenge erforderlich sein, in den Reaktionsraum weiteres Wasser zuzugeben, damit das entstehende Salz nicht ausfällt.

Vorzugsweise wird die Wassermenge durch das Volumen eines dem erfindungsgemäßen Set oder Nachrüstset beiliegenden Einfüllbehälters vorgegeben, aus der zunächst der Vorratsbehälter (2) aufgefüllt und die verbleibende Wassermenge in den Reaktionsraum gegeben wird.

Beispielsweise lassen sich mit einem Gesamtvolumen des erfindungsgemäßen Sets von einem Liter, wobei der Vorratsraum 1/3 Liter und der Reaktionsraum 2/3 Liter umfaßt, ca. 160g oder 87 Liter CO₂ (bei 20°C) erzeugen. Hierfür werden beispielsweise 232g Zitronensäure und 306g Natriumhydrogencarbonat benötigt. Das entstehende Tri-Natriumcitrat bleibt dabei vollständig gelöst. Die genannte Menge an erzeugtem CO₂ reicht aus, den Bedarf eines gut bepflanztes Aquariums mit 1000 Liter Inhalt für einen Monat zu decken.

Für kleinere Aquarien werden entsprechend kleinere Sets benötigt. Für ein Aquarium mit 100 Liter Inhalt ergibt sich demnach ein Volumen von 100 ml und es werden 23,2g Zitronensäure und 30,6g Natriumhydrogencarbonat zu Erzeugung von 8,7 Liter CO₂ eingesetzt.

Ein für ein 100-Liter-Aquarium standardisiertes Set kann durch Zugabe eines zusätzlichen Katalysators, wodurch die Leistung erhöht wird, auch in größeren Aquarien eingesetzt werden, wobei sich allerdings die Betriebsdauer entsprechend verringert. Durch Verdoppelung des Katalysators beispielsweise verdoppelt sich die pro Zeiteinheit erzeugte Menge CO2, und die Betriebsdauer wird halbiert.

## Patentansprüche

1. Verfahren zur kontinuierlichen Langzeitdosierung von CO₂ in biologisch genutzten Medien, das die folgenden Schritte umfaßt:
i) Austreiben einer wäßrigen Säurelösung aus einem Vorratsbehälter mittels einer gasdruckerzeugenden chemischen Reaktion,
ii) Eintropfen der Säurelösung in eine feste und/oder flüssige Carbonat- oder Hydrogencarbonatzusammensetzung, und
iii) Zuführung des entstehenden CO₂ in das biologisch genutzte Medium.

2. Verfahren gemäß Anspruch 1, worin die gasdruckerzeugende chemischen Reaktion in Schritt i) in dem Vorratsbehälter abläuft.

3. Verfahren gemäß Anspruch 1 oder 2, worin das biologisch genutzte Medium Wasser ist.

4. Verfahren gemäß Anspruch 2 oder 3, worin die Zuführung des entstehenden CO₂ in das Wasser durch diffusive Lösung des entstehenden CO₂ über eine Taucherglocke erfolgt.

5. Verfahren gemäß mindestens einem der Ansprüche 1 bis 4, worin die wäßrige Säurelösung eine Zitronensäurelösung ist.

6. Verfahren gemäß mindestens einem der Ansprüche 1 bis 5, worin das Carbonat oder Hydrogencarbonat Natriumhydrogencarbonat ist.

7. Verfahren gemäß mindestens einem der Ansprüche 1 bis 6, worin die gasdruckerzeugende chemische Reaktion die Umsetzung einer Hydroperoxidverbindung unter Freisetzung von Sauerstoff ist.

8. Verfahren gemäß Anspruch 7, worin die gasdruckerzeugende chemische Reaktion die Umsetzung von Hydroperoxyharnstoff ist.

9. Verfahren gemäß mindestens einem der Ansprüche 1 bis 8, worin die gasdruckerzeugende chemische Reaktion durch einen oder mehrere Katalysator(en) katalysiert wird.

10. Verfahren gemäß Anspruch 9, worin der Katalysator Mangandioxid, vorzugsweise keramisch gebundenes Mangandioxid, ist.

11. Set zur Durchführung des Verfahrens nach mindestens einem der Ansprüche 1-10, umfassend einen Vorratsbehälter (1), eine Einheitsmenge eines Carbonats oder Hydrogencarbonats oder eine Mischung aus zwei oder mehr solcher Verbindungen, und einen darauf oder darin anzubringenden Vorratsbehälter (2) für die wässrige Säurelösung mit einer Austrittsöffnung, die das Eintropfen in das (Hydrogen)Carbonat oder dessen Lösung erlaubt, und der mit einer Zusammensetzung beschickt ist, die (i) eine feste wasserlösliche Säure, (ii) eine wasserlösliche und vorzugsweise feste Verbindung, die katalytisch unter Gasentwicklung zersetzt werden kann, und (iii) einen Katalysator umfaßt.

12. Set gemäß Anspruch 11, das ferner ein Gaszuführsystem aufweist, über das das entstehende CO₂ in das zu versorgende biologische Medium eingeführt wird.

13. Set gemäß Anspruch 12, worin das Gaszuführsystem eine Taucherglocke ist.

14. Set gemäß mindestens einem der Ansprüche 11-13, das ferner ein Gewicht (4) umfaßt, das so dimensioniert ist, daß das Set im einsatzbereiten Zustand ein größeres Gewicht besitzt als die von ihr verdrängte Flüssigkeitsmenge, wenn sie vollständig in ein wäßriges Medium eingetaucht wird.

15. Set gemäß mindestens einem der Ansprüche 11-13, das ferner einen oder mehrere Saugnäpfe (4) umfaßt.

16. Nachrüstset zur Durchführung des Verfahrens nach mindestens einem der Ansprüche 1-10, umfassend eine Einheitsmenge eines Carbonats oder Hydrogencarbonats oder eine Mischung aus zwei oder mehr solcher Verbindungen und einen Vorratsbehälter (2) für die wäßrige Säurelösung mit einer Austrittsöffnung, die das Eintropfen in die Carbonatlösung erlaubt, und der mit einer Zusammensetzung beschickt ist, die (i) eine wasserlösliche Säure, (ii) eine Verbindung, die katalytisch unter Gasentwicklung zersetzt werden kann, und (iii) einen Katalysator umfaßt.

17. Nachrüstset gemäß Anspruch 16, worin die wasserlösliche Säure und/oder die Verbindung, die katalytisch unter Gasentwicklung zersetzt werden kann, eine feste Verbindung ist/sind.

## Claims

1. Process for continuous long-term metering of CO₂ into biologically utilised media which comprises the following steps:
i) expulsion of an aqueous acid solution from a storage container by means of a chemical reaction which produces gas pressure,
ii) dropwise addition of the acid solution into a solid and/or liquid carbonate or hydrogen carbonate composition, and
iii) supplying the resulting CO₂ to the biologically utilised medium.

2. Process according to claim 1, wherein the chemical reaction which produces gas pressure in step i) proceeds in the storage container.

3. Process according to claim 1 or 2, wherein the biologically utilised medium is water.

4. Process according to claim 2 or 3, wherein supplying the resulting CO₂ into the water takes place by diffusive dissolution of the resulting CO₂ via a diving bell.

5. Process according to at least one of claims 1 to 4, wherein the aqueous acid solution is a citric acid solution.

6. Process according to at least one of claims 1 to 5, wherein the carbonate or hydrogen carbonate is sodium hydrogen carbonate.

7. Process according to at least one of claims 1 to 6, wherein the chemical reaction which produces gas pressure is the reaction of a hydroperoxide compound with release of oxygen.

8. Process according to claim 7, wherein the chemical reaction which produces gas pressure is the reaction of hydroperoxyurea.

9. Process according to at least one of claims 1 to 8, wherein the chemical reaction which produces gas pressure is catalysed by one or more catalyst(s).

10. Process according to claim 9, wherein the catalyst is manganese dioxide, preferably ceramically bound manganese dioxide.

11. Set for carrying out the process according to at least one of claims 1-10, comprising a storage container (1), a unit quantity of a carbonate or hydrogen carbonate or a mixture of two or more such compounds, and a storage container (2) to be attached thereon or therein for the aqueous acid solution having an outlet opening which permits dropwise addition into the (hydrogen) carbonate or solution thereof, and which is charged with a composition which comprises (i) a solid water-soluble acid, (ii) a water-soluble and preferably solid compound, which may be decomposed catalytically with development of gas, and (iii) a catalyst.

12. Set according to claim 11, which also has a gas-supply system, via which the resulting CO₂ is introduced into the biological medium to be supported.

13. Set according to claim 12, wherein the gas-supply system is a diving bell.

14. Set according to at least one of claims 11-13, which also comprises a weight (4) which has dimensions so that the set has, in the ready-to-use state, a greater weight than the quantity of liquid displaced by it when it is completely immersed in an aqueous medium.

15. Set according to at least one of claims 11-13, which also comprises one or more suction cups (4).

16. Retrofitting set for carrying out the process according to at least one of claims 1-10, comprising a unit quantity of a carbonate or hydrogen carbonate or a mixture of two or more such compounds and a storage container (2) for the aqueous acid solution having an outlet opening which permits dropwise addition into the carbonate solution, and which is charged with a composition which comprises (i) a water-soluble acid, (ii) a compound, which may be decomposed catalytically with development of gas, and (iii) a catalyst.

17. Retrofitting set according to claim 16, wherein the water-soluble acid and/or the compound, which may be decomposed catalytically with development of gas, is/are a solid compound.

## Revendications

1. Procédé de dosage en continu sur longue durée du CO₂ dans des milieux utilisés biologiquement, comprenant les étapes ci-après :
i) expulsion d'une solution acide aqueuse d'un récipient de stockage, au moyen d'une réaction chimique générant une pression de gaz,
ii) introduction goutte-à-goutte de la solution acide dans une composition solide et/ou liquide de carbonate ou de carbonate hydrogéné, et
iii) introduction du CO₂ produit dans le milieu utilisé biologiquement.

2. Procédé selon la revendication 1, dans lequel la réaction chimique produisant une pression de gaz à l'étape i) se déroule dans le récipient de stockage.

3. Procédé selon la revendication 1 ou 2, dans lequel le milieu utilisé biologiquement est l'eau.

4. Procédé selon la revendication 2 ou 3, dans lequel l'introduction du CO₂ produit dans l'eau se fait par mise en solution diffusive du CO₂ produit, par l'intermédiaire d'une cloche à plongeur.

5. Procédé selon au moins l'une des revendications 1 à 4, dans lequel la solution acide aqueuse est une solution d'acide citrique.

6. Procédé selon au moins l'une des revendications 1 à 5, dans lequel le carbonate ou hydrogénocarbonate est de l'hydrogénocarbonate de sodium.

7. Procédé selon au moins l'une des revendications 1 à 6, dans lequel la réaction chimique produisant une pression de gaz est la conversion d'un composé d'hydroperoxyde avec dégagement d'oxygène.

8. Procédé selon la revendication 7, dans lequel la réaction chimique produisant une pression de gaz est la conversion d'une hydroperoxy-urée.

9. Procédé selon au moins l'une des revendications 1 à 8, dans lequel la réaction chimique produisant une pression de gaz est catalysée par un ou plusieurs catalyseurs.

10. Procédé selon la revendication 9, dans lequel le catalyseur est du dioxyde de manganèse, de préférence du dioxyde de manganèse lié de façon céramique.

11. Ensemble de mise en oeuvre du procédé selon au moins l'une des revendications 1 à 10, comprenant un récipient de stockage (1), une quantité unitaire d'un carbonate ou d'un carbonate hydrogéné, ou un mélange de deux ou plus de ces composés, et un récipient de stockage (2), à appliquer sur lui ou dans lui, pour la solution acide aqueuse, avec une ouverture de sortie permettant introduction goutte-à-goutte dans le carbonate (hydrogéné) ou sa solution, et garni d'une composition qui comprend (i) un acide solide, soluble dans l'eau, (ii) un composé soluble dans l'eau et, de préférence, solide, pouvant être décomposé par voie catalytique avec développement de gaz, et (iii) un catalyseur.

12. Ensemble selon la revendication 11, présentant en outre un système d'amenée de gaz, par lequel le CO₂ produit est introduit dans le milieu biologique à alimenter.

13. Ensemble selon la revendication 12, dans lequel le système d'amenée de gaz est une cloche à plongeur.

14. Ensemble selon au moins l'une des revendications 11 à 13, comprenant en outre un poids (4) dimensionné de manière que l'ensemble, à l'état prêt à l'utilisation, ait un poids supérieur à la quantité de liquide déplacée par celui-ci lorsqu'il est complètement immergé dans un milieu aqueux.

15. Ensemble selon au moins l'une des revendications 11 à 13, comprenant en outre une ou plusieurs ventouses (4).

16. Jeu de rééquipement pour la mise en oeuvre du procédé selon au moins l'une des revendications 1 à 10, comprenant une quantité unitaire d'un carbonate ou d'un carbonate hydrogéné, ou bien un mélange de deux, ou plus, composés de ce type, et un récipient de stockage (2) pour la solution acide aqueuse, avec une ouverture de sortie qui permet l'introduction goutte-à-goutte dans la solution de carbonate, et qui est garni d'une composition qui comprend (i) un acide soluble dans l'eau, (ii) un composé, pouvant être décomposé par voie catalytique avec développement de gaz, et (iii) un catalyseur.

17. Jeu de rééquipement selon la revendication 16, dans lequel l'acide soluble dans l'eau et/ou le composé, pouvant être décomposée par voie catalytique avec développement de gaz, est/sont un composé solide.
